# EUROPÄISCHE PATENTSCHRIFT

(11) **EP 1 740 041 B1**
(45) Veröffentlichungstag und Bekanntmachung des Hinweises auf die Patenterteilung: **01.10.2008**
(21) Anmeldenummer: 05715866.9
(22) Anmeldetag: 09.03.2005
(51) Int. Cl.: A01M 29/00

(54) **VORRICHTUNG ZUR ABWEHR VON TIEREN**
ANIMAL REPELLING DEVICE
DISPOSITIF DE PROTECTION CONTRE DES ANIMAUX

(30) Priorität: 27.04.2004 DE 202004006747 U
(43) Veröffentlichungstag der Anmeldung: 10.01.2007
(73) Patentinhaber: Pollmann, Walter, 35745 Herborn-Hörbach (DE)
(72) Erfinder: Pollmann, Walter, 35745 Herborn-Hörbach (DE)
(74) Vertreter: von den Steinen, Axel
(86) Internationale Anmeldenummer: PCT/EP2005/002475
(87) Internationale Veröffentlichungsnummer: WO 2005/107452

(56) Entgegenhaltungen:
- EP-A- 1 314 355
- DE-A1- 3 930 012
- US-A- 4 165 577
- US-A- 4 299 048
- US-A- 5 007 196
- PATENT ABSTRACTS OF JAPAN Bd. 018, Nr. 285 (C-1206), 31. Mai 1994 (1994-05-31) -& JP 06 054637 A (GUREESU SANGYO KK), 1. März 1994 (1994-03-01)
- DATABASE WPI Section Ch, Week 200346 Derwent Publications Ltd., London, GB; Class A26, AN 2003-485806 XP002330419 & JP 2002 327151 A (TEKKU TAIYO KOGYO KK) 15. November 2002 (2002-11-15)

## Beschreibung

Die Erfindung betrifft eine Vorrichtung zur Abwehr von Tieren, insbesondere Insekten, mit einem Trägerelement, an dem zumindest zwei Leitungsstränge vorgesehen sind, zwischen denen eine elektrische Spannung anlegbar ist.

Unter dem Begriff Tiere können vornehmlich tierische Schädlinge verstanden werden, die dem Menschen und seiner Wirtschaft im weitesten Sinne Schaden zufügen. Dabei kann es sich vornehmlich, aber nicht ausschließlich, um Insekten handeln. Eine Gruppe von tierischen Schädlingen sind z.B. Termiten und Ameisen, die eine ernst zu nehmende Bedrohung von Gebäuden beziehungsweise Gebäudeteilen darstellen. Vor allem Gebäude aus Holz oder Holzbestandteilen werden durch diese Insekten bedroht, da beispielsweise Termiten auch tragende Konstruktionsbestandteile innerhalb weniger Tage zerstören können.

Es ist vornehmlich für den Bautenschutz bekannt, Termiten und andere Schädlinge mit chemischen Mitteln, insbesondere Giftstoffen zu bekämpfen. Wegen der ungünstigen Umweltbeeinflussungen und der Gefahr des Eintritts der Giftstoffe in die menschliche Nahrungskette und damit verbundener möglicher Gesundheitsschäden ist die chemische/toxische Bekämpfung von Termiten und ähnlichen tierischen Schädlingen z.B. in Anbaugebieten allerdings äußerst problematisch. Diese Methode bringt also erhebliche ökologische Nachteile mit sich und ist außerdem wegen der hohen Preise für die Insektizide teuer. Ein weiterer Nachteil besteht darin, dass die Insekten nach gewisser Zeit wieder in ihre Umgebung einwandern können, so dass dann erneut Insektizide versprüht werden müssen.

Die DE 39 30 012 beschreibt eine Vorrichtung zur Abwehr von Vögeln, bei der die stromführenden Kabel aus einer Metalllitze und einem die Metalllitze umgebenden Kunststoffhalbleitermaterial bestehen.

Die US 4,299,048 A beschreibt ebenfalls eine Vorrichtung zur Abwehr von Vögeln. Zum Anschluss der stromführenden Kabel an eine Spannungsquelle dient Anschlussbolzen, durch deren Fixierung das freie Ende der stromführenden Kabel mit dem freien Ende eines Anschlusskabels stromleitend verbunden wird. Nachteilig an dieser Art des elektrischen Anschlusses ist der hohe Montageaufwand zur Fixierung der Anschschlussbolzen, die zudem eine hohe handwerkliche Sachkunde erfordert

In Anbetracht des bekannten Stands der Technik liegt der Erfindung die Aufgabe zugrunde, eine Vorrichtung zur Bekämpfung von Tieren, insbesondere von Insekten, zu schaffen, wobei unter Nutzung von zumindest zwei Leitungssträngen aus einem stromleitfähigen Kunststoff die Montagearbeiten beim Anschluss der Leitungssträngen an eine Spannungsquelle vereinfacht werden.

Erfindungsgemäß wird diese Aufgabe nach dem Oberbegriff des Anspruchs 1 gelöst.

Vorteilhafte Ausführungsformen der Erfindung sind Gegenstand der Unteransprüche.

Zur erfolgreichen Abwehr von Tieren, insbesondere von Insekten, weist die Vorrichtung gattungsgemäß zumindest zwei Leitungsstränge auf, die aus einem stromleitfähigen Kunststoff hergestellt sind. Anhand dieser stromleitfähigen Leitungsstränge, ist es möglich eine Vorrichtung zur Abwehr von Tieren zu schaffen, die auf den Gebrauch chemischer/toxischer Bekämpfungsmittel vollkommen verzichtet. Ein weiterer Vorteil der Vorrichtung liegt darin, dass sie mit sehr einfachen Mitteln hergestellt werden kann, wobei eine sichere Funktionalität der Vorrichtung gewährleistet werden kann.

Erfindungsgemäß wird der Anschluss des Leitungsstrangs und/oder des Leitungskörpers an die elektrische Spannungsquelle über eine Clipverbindung erfolgen, wobei der Clip über zumindest zwei, insbesondere beispielsweise vier Kontaktstifte verfügt. Am freien Ende der Kontaktstifte ist jeweils eine Spitze gebildet, mit der die Kontaktstifte in die Leitungsstränge eindringen und dadurch die in die Leitungsstränge eingebetteten Leitungskörper kontaktieren. Im Ergebnis kann also durch einfaches Verschließen der Clipverbindung der elektrische Anschluss der Leitungsstränge durch Eindringen der Kontaktstifte in den stromleitfähigen Kunststoff gewährleistet werden, was den Montageaufwand erheblich verringert.

Um die Betriebssicherheit der Vorrichtung weiter zu erhöhten, kann im Leitungsstrang zumindest ein elektrischer Leitungskörper vorgesehen sein, wobei der Leitungsstrang den Leitungskörper im Wesentlichen vollflächig umschließt. Dies hat den Vorteil, dass keine Oxidation des Leitungskörpers möglich ist, da der Leitungskörper voll im Leitungsstrang eingebettet ist.

Vorteilhafterweise kann der Leitungskörper also im Leitungsstrang eingegossen bzw. auf eine ähnliche Art im Leitungsstrang vorgesehen sein. Ein weiterer Vorteil einer solchen Einbettung liegt darin, dass anhand der Oberfläche des Leitungsstrangs nicht erkennbar ist wo genau der stromführende Leitungskörper liegt.

Um eine Stromversorgung des Leitungsstrangs bzw. des Leitungskörpers zu gewährleisten, kann der Leitungsstrang und/oder der Leitungskörper mittel- und/oder unmittelbar an eine elektrische Spannungsquelle anschließbar sein. Die optimale elektrische Spannung für den Leitungsstrang und/oder den Leitungskörper kann dabei im Bereich von 1000 bis 3000 Volt liegen.

Es ist weiterhin denkbar, dass der Clip als Verbindungselement zwischen zwei miteinander zu verbindenden Leitungssträngen zum Einsatz kommen kann.

Der Vorteil einer solchen Clipverbindung liegt in der sehr einfachen Handhabung bzw. der hohen Betriebssicherheit eines solchen Clips.

Der elektrische Leitungskörper selber kann in der Art einer Drahtlitze und/oder einer Metallfolie ausgebildet sein. Wird der elektrische Leitungskörper als Metallfolie ausgebildet, so kann es sich bevorzugt um eine vernickelte Kupferfolie handeln. Die Vorteile einer solchen vernickelten Kupferfolie, liegen in der extrem guten Leitfähigkeit einer solchen Kupferfolie.

Die Metallfolie selber kann zwischen 0,1 mm und 0,5 mm, bevorzugt jedoch 0,2 mm stark ausgeführt sein. Die Breite einer solchen Metallfolie kann zwischen 1 cm und 10 cm, bevorzugt jedoch 3 cm betragen.

Je nach Ausführungsform des Leitungsstrangs bzw. der zu übertragenden Spannung, kann die Metallfolie natürlich auch in anderen Abmessungen hergestellt sein. In welcher Art und Weise die Metallfolie hergestellt ist spielt erfindungsgemäß jedoch keine Rolle.

Das Trägerelement der Vorrichtung kann aus einem flexiblen Kunststoffmaterial, insbesondere jedoch aus PVC hergestellt sein. Der Vorteil einer solchen Ausführungsform läge insbesondere darin, dass das Trägerelement in einfacher Weise an Ecken bzw. Rundungen angeformt werden kann. PVC insbesondere erlaubt eine sehr einfache Herstellung eines solchen Trägerelements und weist eine hohe Witterungsbeständigkeit auf.

Eine bevorzugte Ausführungsform der Vorrichtung sieht vor, dass am Trägerelement zumindest eine Nut vorgesehen sein kann, in der ein Leitungsstrang eingelegt werden kann, wobei die Nut im Wesentlichen formkomplementär zum Leitungsstrang ausgebildet sein kann. Der Vorteil einer solchen Nut im Trägerelement bzw, eines in den Nut vorgesehenen Leitungsstrangs liegt darin, dass die Vorrichtung eine absolut glatte Oberfläche aufweisen könnte, wodurch den Insekten keine Möglichkeit gegeben werden könnte, sich an der Oberseite der Vorrichtung festzuklammern. Die Anbringung eines Leitungsstrangs in einer Nut bzw. die Verbindung der in der Vorrichtung vorgesehenen Stromleitquellen, kann durch z.B. eine Clipbefestigung oder ähnliches realisiert werden. Es sind natürlich auch andere Befestigungsmethoden denkbar.

Um den Tieren, insbesondere den Insekten, das Begehen bzw. das Aufsteigen auf die Vorrichtung zu erleichtern, kann zumindest ein Teilbereich des Trägerelements leicht abgekantet und mit einer Schräge versehen ausgebildet sein. Dies hat den Vorteil, dass die Vorrichtung bzw. das Trägerelement leichter in das Erdreich integriert werden kann, wodurch eine höhere Funktionalität der Vorrichtung gewährleistet werden kann.

Eine besonders bevorzugte Ausführungsform der Vorrichtung sieht vor, dass die durch Trägerelement und Leitungsstrang gebildete Außenseite der Vorrichtung eine glattflächige Oberfläche darstellen kann. Dies hat den Vorteil, dass sich kein Schmutz bzw. Insekten in den Zwischenräumen der Nuten ansammeln können. Die Vorrichtung kann somit als nahezu Wartungsfrei betrachtet werden.

Im Folgenden wird die Erfindung anhand lediglich Ausführungsbeispiele zeigender Zeichnungen näher erläutert.

Es zeigt:
- **Fig. 1**: ein Trägerelement in seitlicher Schnittansicht;
- **Fig. 2**: eine Vorrichtung mit dem Trägerelements gemäß Fig. 1 in einer seitlichen Schnittansicht;
- **Fig.3**: einen Clip in einer seitlichen Ansicht.

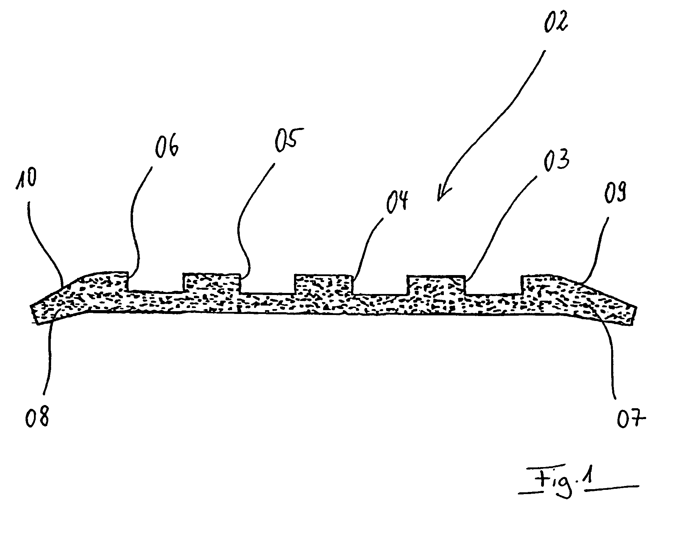

In **Fig. 1** ist die seitliche Schnittansicht eines Trägerelements 02 zu sehen. Im Trägerelement 02 sind vier Nuten 03, 04, 05, 06 vorgesehen, die das Trägerelement 02 im Wesentlichen vollständig durchlaufen. Des Weiteren weist das Trägerelement 02 leicht abgekantete Teilbereiche 07, 08, auf, wobei die Teilbereiche mit einer Schräge 09, 10 versehen sind. Die Anbringung der leicht abgekanteten Teilbereiche 07 und 08 bzw. die an den abgekanteten Teilbereichen 07 und 08 angebrachten Schrägen 09 und 10, sollen den Tieren das Begehen des Trägerelements erleichtern.

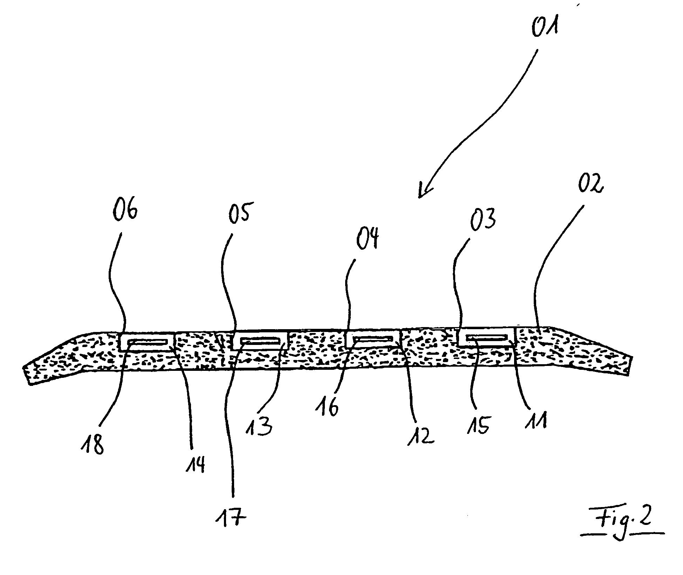

**Fig. 2** zeigt eine Vorrichtung 01 mit dem Trägerelement 02 in einer seitlichen Schnittansicht. Im Trägerelement 02 bzw. in den Nuten 03, 04, 05, 06 sind Leitungsstränge 11, 12, 13, 14 vorgesehen, die im Wesentlichen formkomplementär zu den Nuten 03,04,05,06 ausgebildet sind. Durch eine solche Anordnung der Leitungsstränge 11, 12, 13, 14 in den Nuten 03, 04, 05, 06 kann eine glatte Oberfläche des Trägerelements 02 erreicht werden, wodurch den Tieren keine Möglichkeiten zum Festklammern an das Trägerelement 02 bzw. an die Leitungsstränge 11, 12, 13, 14 gegeben wird. Außerdem kann die Vorrichtung 01 somit besser gegen Verunreinigung geschützt werden.

In den Leitungssträngen 11, 12, 13, 14 sind Leitungskörper 15, 16, 17, 18 vorgesehen, die im Wesentlichen vollständig in den Leitungssträngen 11, 12, 13, 14 eingebettet sind. Die Leitungskörper 15, 16, 17, 18 sind hierbei in der Art einer Metallfolie ausgebildet. Die Leitungsstränge 11, 12, 13, 14 können über eine einfache Clipbefestigung mit dem Trägerelement 02 verbunden werden. Aufwendige Anschlussarbeiten der Leitungsstränge 11, 12, 13, 14 bzw der Leitungskörper 15, 16, 17, 18 könnten somit vollkommen vermieden werden.

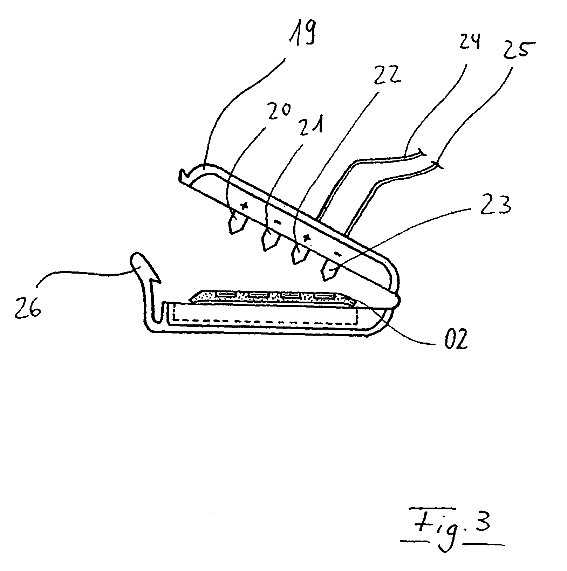

**Fig.3** zeigt einen Clip 19 in einer seitlichen Ansicht. Am Clip 19 sind Kontaktstifte 20, 21, 22, 23 vorgesehen, die über Anschlussleiter 24, 25 mit einer elektrischen Spannungsquelle verbunden sind. Der Clip 19 kann über eine Schnapphebelverbindung 26 verschlossen werden. Alternativ dazu kann auch eine Schraubverbindung vorgesehen sein. Im Clip 19 ist das Trägerelement 02 gemäß **Fig.2** zu erkennen. Wird der Clip 19 anhand der Schnapphebelverbindung 26 verschlossen, so kommen die Kontaktstifte 20, 21, 22, 23 mit den im Trägerelement 02 vorgesehenen Leitungssträngen und/oder Leitungskörpern in Kontakt wodurch das Trägerelement 02 mit Strom beaufschlagt werden kann. Durch geeignete Formgebung des freien Endes der Kontaktstifte 20, 21, 22, 23, beispielsweise durch Bildung einer Spitze, kann erreicht werden, dass die Kontaktstifte 20, 21, 22, 23 in die Leitungsstränge eindringen und dadurch die in die Leitungsstränge eingebetteten Leitungskörper 15, 16, 17, 18 kontaktieren.

## Patentansprüche

1. Vorrichtung (01) zur Abwehr von Tieren, insbesondere Insekten, mit einem Trägerelement (02), an dem zumindest zwei Leitungsstränge (11, 12, 13, 14) vorgesehen sind, zwischen denen eine elektrische Spannung anlegbar ist, wobei die Leitungsstränge (11, 12, 13, 14) aus einem stromleitfähigen Kunststoff hergestellt sind
**dadurch gekennzeichnet,**
**dass** der Anschluss des Leitungsstrangs (11, 12, 13, 14) und/oder des im Wesentlichen vollständig im Leitungsstrang eingebetteten elektrischen Leitungskörpers (15, 16, 17, 18) an eine elektrische Spannungsquelle über eine Clipverbindung erfolgt, wobei der Clip (19) über zumindest zwei Kontaktstifte (20, 21, 22, 23) verfügt, wobei
am freien Ende der Kontaktstifte (20, 21, 22, 23) eine Spitze gebildet ist, mit der die Kontaktstifte (20, 21, 22, 23) in die Leitungsstränge eindringen und **dadurch** in die Leitungsstränge eingebetteten Leitungskörper (15, 16, 17, 18) kontaktieren.

2. Vorrichtung nach Anspruch 1,
**dadurch gekennzeichnet,**
**dass** im Leitungsstrang (11, 12, 13, 14) zumindest ein elektrischer Leitungskörper (15, 16, 17, 18) vorgesehen ist, wobei der Leitungsstrang (11, 12, 13, 14) den Leitungskörper (15, 16, 17, 18) im Wesentlichen vollflächig umschließt.

3. Vorrichtung nach Anspruch 2,
**dadurch gekennzeichnet,**
**dass** der Leitungskörper (15, 16, 17, 18) im Leitungsstrang (11, 12, 13, 14) eingegossen ist.

4. Vorrichtung nach einem der Ansprüche 1 bis 3,
**dadurch gekennzeichnet,**
**dass** der Leitungsstrang (11, 12, 13, 14) und/oder der Leitungskörper (15, 16, 17, 18) mittel- und/oder unmittelbar an eine elektrische Spannungsquelle anschließbar sind.

5. Vorrichtung nach einem der Ansprüche 1 bis 4,
**dadurch gekennzeichnet,**
**dass** der Clip (19) als Verbindungselement zwischen zumindest zwei miteinander zu verbindenden Leitungssträngen (11, 12, 13, 14) zum Eingriff kommen kann.

6. Vorrichtung nach einem der Ansprüche 2 bis 5,
**dadurch gekennzeichnet,**
**dass** der elektrische Leitungskörper (15, 16, 17, 18) in der Art einer Drahtlitze und/oder einer Metallfolie ausgebildet ist.

7. Vorrichtung nach Anspruch 6,
**dadurch gekennzeichnet,**
**dass** es sich bei der Metallfolie um eine vernickelte Kupferfolie handelt.

8. Vorrichtung nach einem der Ansprüche 6 oder 7,
**dadurch gekennzeichnet,**
**dass** die Metallfolie zwischen 0,1 mm und 0,5 mm, bevorzugt jedoch 0,2 mm stark ausgeführt ist.

9. Vorrichtung nach einem der Ansprüche 6 bis 8,
**dadurch gekennzeichnet,**
**dass** die Metallfolie zwischen 1 cm und 10 cm, bevorzugt jedoch 3 cm breit ausgeführt ist.

10. Vorrichtung nach einem der Ansprüche 1 bis 9,
**dadurch gekennzeichnet,**
**dass** das Trägerelement (02) aus einem flexiblen Kunststoffmaterial, insbesondere jedoch aus PVC, hergestellt ist.

11. Vorrichtung nach einem der Ansprüche 1 bis 10,
**dadurch gekennzeichnet,**
**dass** am Trägerelement (02) zumindest eine Nut (03, 04, 05, 06) vorgesehen ist, in der der Leitungsstrang (11, 12, 13, 14) einlegbar ist, wobei die Nut (03, 04, 05, 06) im Wesentlichen formkomplementär zum Leitungsstrang (11, 12, 13, 14) ausgebildet ist.

12. Vorrichtung nach einem der Ansprüche 1 bis 11,
**dadurch gekennzeichnet,**
**dass** zumindest ein Teilbereich (07, 08) des Trägerelements (02) leicht abgekantet und mit einer Schräge (09, 10) versehen ausgebildet ist.

13. Vorrichtung nach einem der Ansprüche 1 bis 12,
**dadurch gekennzeichnet,**
**dass** die von Trägerelement (02) und Leitungsstrang (11, 12, 13, 14) gebildete Außenseite der Vorrichtung (01) eine glattflächige Oberfläche darstellt.

## Claims

1. Device (01) for repelling animals, particularly insects, with a support element (02) on which at least two line branches (11, 12, 13, 14) are provided, between which an electric voltage can be applied, the line branches (11, 12, 13, 14) being manufactured from an electrically conductive plastic,
**characterized in that**
the line branch (11, 12, 13, 14) and/or the electrical conducting body (15, 16, 17, 18), which is essentially completely embedded in the line branch, is connected to an electric voltage source by means of a clip connection, the clip (19) having at least two contact pins (20, 21, 22, 23),
a point being formed at the free end of the contact pins (20, 21, 22, 23), using which point the contact pins (20, 21, 22, 23) penetrate into the line branches and, as a result, contact conducting bodies (15, 16, 17, 18) which are embedded in the line branches.

2. Device according to Claim 1,
**characterized in that**
at least one electrical conducting body (15, 16, 17, 18) is provided in the line branch (11, 12, 13, 14), the line branch (11, 12, 13, 14) essentially completely enclosing the conducting body (15, 16, 17, 18).

3. Device according to Claim 2,
**characterized in that**
the conducting body (15, 16, 17, 18) is infused in the line branch (11, 12, 13, 14).

4. Device according to one of Claims 1 to 3,
**characterized in that**
the line branch (11, 12, 13, 14) and/or the conducting body (15, 16, 17, 18) can be connected directly and/or indirectly to an electric voltage source.

5. Device according to one of Claims 1 to 4,
**characterized in that**
the clip (19) can come into engagement as a connecting element between at least two line branches (11, 12, 13, 14) which are to be connected with one another.

6. Device according to one of Claims 2 to 5,
**characterized in that**
the electric conducting body (15, 16, 17, 18) is configured as a kind of wire strand and/or metal foil.

7. Device according to Claim 6,
**characterized in that**
the metal foil is a nickel-plated copper foil.

8. Device according to one of Claims 6 or 7,
**characterized in that**
the metal foil is between 0.1 mm and 0.5 mm, preferably however 0.2 mm, thick.

9. Device according to one of Claims 6 to 8,
**characterized in that**
the metal foil is between 1 cm and 10 cm, preferably however 3 cm, wide.

10. Device according to one of Claims 1 to 9,
**characterized in that**
the support element (02) is manufactured from a flexible plastic material, particularly however from PVC.

11. Device according to one of Claims 1 to 10,
**characterized in that**
at least one groove (03, 04, 05, 06) is provided on the support element (02), in which groove the line branch (11, 12, 13, 14) can be inserted, the groove (03, 04, 05, 06) essentially being configured with a complementary shape to the line branch (11, 12, 13, 14).

12. Device according to one of Claims 1 to 11,
**characterized in that**
at least a subregion (07, 08) of the support element (02) is configured slightly bent and provided with a chamfer (09, 10).

13. Device according to one of Claims 1 to 12,
**characterized in that**
the exterior of the device (01), which is formed by the support element (02) and line branch (11, 12, 13, 14), constitutes a smooth surface.

## Revendications

1. Dispositif (01) répulsif contre les animaux, notamment les insectes, comportant un élément porteur (02), sur lequel au moins deux faisceaux de ligne (11, 12, 13, 14) sont prévus, entre lesquels une tension électrique peut être appliquée, moyennant quoi les faisceaux de ligne (11, 12, 13, 14) sont fabriqués dans un plastique conducteur d'électricité,
**caractérisé en ce que**
le raccordement du faisceau de ligne (11, 12, 13, 14) et/ou du corps conducteur d'électricité (15, 16, 17, 18) incorporé essentiellement complètement dans le faisceau de ligne à une source de tension électrique est effectué via une liaison par clip, moyennant quoi le clip (19) dispose d'au moins deux broches de contact (20, 21, 22, 23), moyennant quoi
à l'extrémité libre des broches de contact (20, 21, 22, 23),une pointe est formée, avec laquelle les broches de contact (20, 21, 22, 23) pénètrent dans le faisceau de ligne et contactent ainsi le corps conducteur (15, 16, 17, 18) incorporé dans le faisceau de ligne.

2. Dispositif selon la revendication 1,
**caractérisé en ce que**
dans le faisceau de ligne (11, 12, 13, 14), au moins un corps conducteur d'électricité (15, 16, 17, 18) est prévu, moyennant quoi le faisceau de ligne (11, 12, 13, 14) enveloppe le corps conducteur (15, 16, 17, 18) essentiellement sur sa surface totale.

3. Dispositif selon la revendication 2,
**caractérisé en ce que**
le corps conducteur (15, 16, 17, 18) est coulé dans le faisceau de ligne (11, 12, 13, 14).

4. Dispositif selon une des revendications 1 à 3,
**caractérisé en ce que**
le faisceau de ligne (11, 12, 13, 14) et/ou le corps conducteur (15, 16, 17, 18) peuvent être raccordés directement et/ou indirectement à une source de tension électrique.

5. Dispositif selon une des revendications 1 à 4,
**caractérisé en ce que**
le clip (19) en tant qu'élément de liaison peut venir en prise entre au moins deux faisceaux de lignes (11, 12, 13, 14) à relier les uns aux autres.

6. Dispositif selon une des revendications 2 à 5,
**caractérisé en ce que**
le corps conducteur d'électricité (15, 16, 17, 18) est réalisé sous la forme d'un toron et/ou d'une feuille de métal.

7. Dispositif selon la revendication 6,
**caractérisé en ce que**
la feuille de métal consiste en une feuille de cuivre nickelée.

8. Dispositif selon une des revendications 6 ou 7,
**caractérisé en ce que**
la feuille de métal est réalisée à une épaisseur comprise entre 0,1 mm et 0,5 mm, de préférence néanmoins de 0,2 mm.

9. Dispositif selon une des revendications 6 à 8,
**caractérisé en ce que**
la feuille de métal est réalisée à une largeur comprise entre 1 cm et 10 cm, de préférence néanmoins de 3 cm.

10. Dispositif selon une des revendications 1 à 9,
**caractérisé en ce que**
l'élément porteur (02) est fabriqué dans un matériau plastique flexible, notamment néanmoins en PVC.

11. Dispositif selon une des revendications 1 à 10,
**caractérisé en ce que**
sur l'élément porteur (02) est prévue au moins une rainure (03, 04, 05, 06), dans laquelle le faisceau de ligne (11, 12, 13, 14) peut être placé, moyennant quoi la rainure (03, 04, 05, 06) est réalisée avec une forme essentiellement complémentaire de celle du faisceau de ligne (11, 12, 13, 14).

12. Dispositif selon une des revendications 1 à 11,
**caractérisé en ce que**
au moins une zone partielle (07, 08) de l'élément porteur (02) est légèrement repliée et pourvue d'un biseau (09, 10).

13. Dispositif selon une des revendications 1 à 12,
**caractérisé en ce que**
la face externe du dispositif (01) formée par l'élément porteur (02) et le faisceau de ligne (11, 12, 13, 14) constitue une surface lisse.
